(19) Europäisches Patentamt
European Patent Office
Office européen des brevets

(11) Numéro de publication: **0 013 200**
**B1**

(12)

# FASCICULE DE BREVET EUROPEEN

(45) Date de publication du fascicule du brevet: **06.10.82**

(51) Int. Cl.$^3$: **C 07 F 9/40**

(21) Numéro de dépôt: **79400917.5**

(22) Date de dépôt: **27.11.79**

(54) **Hémiesters alcalins d'acides bis(hydroxy-4 phényl) alkylphosphoniques.**

(30) Priorité: **20.12.78 FR 7835753**

(43) Date de publication de la demande: **09.07.80 Bulletin 80/14**

(45) Mention de la délivrance du brevet: **06.10.82 Bulletin 82/40**

(84) Etats contractants désignés: **DE IT NL**

(56) Documents cités:
**FR-A-2 048 493**
**FR-A-2 289 515**
**US-A-3 702 879**

(73) Titulaire: **ATO CHIMIE, Tour Aquitaine Cédex no 4, F-92080 Paris La Defense (FR)**

(72) Inventeur: **Poisson, Pierre, 28 "Les Logis" Avenue du Président Kennedy, F-27300 Bernay (FR)**
Inventeur: **Sturtz, Georges, 22, Rue Léon Blum, F-29200 Brest (FR)**

(74) Mandataire: **Lanos, Françoise, SOCIETE NATIONALE ELF AQUITAINE DEPARTEMENT PROPRIETE INDUSTRIELLE Tour Aquitaine, F-92080 Paris la Defense Cedex No. 4 (FR)**

**EP 0 013 200 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

Hémiesters alcalins d'acides bis(hydroxy-4phenyl) alkylphosphoniques

La présente invention concerne de nouveaux hémiesters alcalins d'acides bis(hydroxy-4 phényl) alkylphosphoniques de formule générale (I)

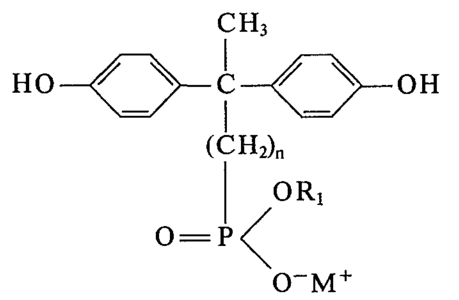

(I)

dans laquelle:

$R_1$ désigne un radical cyclohexyle ou un radical alkyle ayant un nombre de carbones allant de 1 à 6,
n est égal à 0, 1, 2 ou 3, et
M représente un métal alcalin choisi parmi le lithium, le sodium ou le potassium.

Ces produits nouveaux peuvent être obtenus à partir de nouveaux bis(hydroxy-4 phényl) alkylphosphonates de dialkyles de formule générale (II)

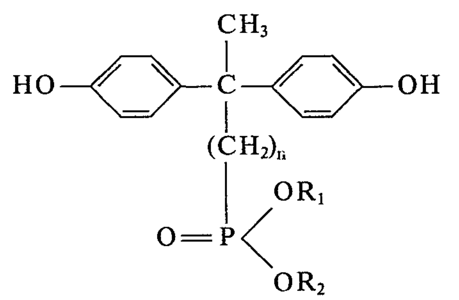

(II)

n étant un nombre entier égal à 1, 2 ou 3, $R_1$ et $R_2$ étant un radical cyclohexyl ou un radical hydrocarboné aliphatique ayant un nombre d'atomes de carbone compris entre 1 et 6, ou de bis(hydroxy-4 phényl)1,1 éthylphosphonates de dialkyles déjà connus de formule générale III.

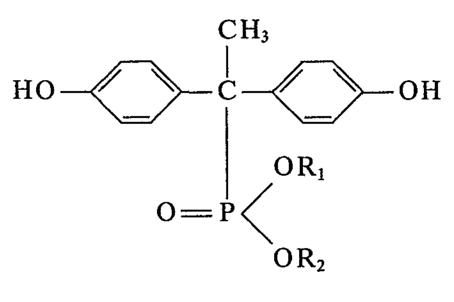

(III)

et qui sont décrits ainsi que leur préparation dans le brevet US 3 702 879.

Les hémiesters alcalins selon l'invention peuvent être utilisés comme antioxydants stabilisants, ignifugeants de matières organiques et en particulier de matières plastiques.

Leur caractère phénolique difonctionnel permet d'envisager leur emploi comme monomère ou comonomère de polycondensation pour conduire à des polymères tels que polyethers, polycarbonates, résines époxydes obtenus à partir de diphénols.

La présence de l'ion phosphonique peut donner à de tels matériaux plastiques des caractères internes de stabilisation, d'ignifugation, d'échange ionique ou d'agents complexant pour les métaux.

Des diesters phosphoniques d'une structure similaire à celle de la formule II ont été décrits par Spivack dans le brevet BE 750 593. Mais les diesters préparés par Spivack comportent plusieurs substitutions aliphatiques ou alicycliques sur les noyaux phényles créant ainsi une structure encombrée qui rend ces produits inaptes à la polycondensation.

Les hémiesters alcalins dérivés de formules II et III ne comportent aucune substitution sur les noyaux phényles ce qui permet de les utiliser comme monomère de polycondensation dans le but d'obtenir des matières plastiques porteuses de fonctions phosphoniques de formule

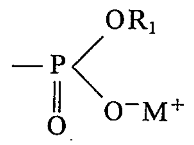

Parmi les hémiesters que l'on peut ainsi obtenir on peut citer entre autre le bis (hydroxy-4 phényl)-1,1, éthylphosphonate de méthyle et de sodium, le bis(hydroxy-4 phényl)-1,1 éthyl phosphonate de méthyle et de Potassium, le bis (hydroxy-4 phényl)-2,2 propyl phosphonate de méthyle et de sodium, le bis(hydroxy-4 phényl)-2,2 propylphosphonate de méthyl et de potassium, le bis(hydroxy-4 phényl)-3,3 butyl-phosphonate de méthyle et de sodium.

Ces hémiesters phosphoniques alcalins peuvent être obtenus à partir des diesters bis(hydroxy-4 phényl) alkylphosphoniques correspondants en traitant ces derniers soit par une solution alcoolique de 10 à 20% en poids d'un hydroxyde alcalin dans un rapport molaire hydroxyde alcalin/Diester de 3,2 à 3,5 soit par une solution cétonique saturée d'un iodure alcalin dans un rapport molaire Na I/Diéster de 1,5 à 2,5.

Un mode de préparation des hémiesters alcalins selon l'invention consiste à traiter le bis(hydroxy-4 phényl) alkylphosphonate de dialkyle correspondant par une solution cétonique d'iodure de sodium à reflux pendant 24 h.

L'hémiester qui précipite est isolé et purifié par filtration, lavage au solvant et séchage sous vide.

Un autre mode de préparation des hémiesters alcalins selon l'invention consiste à traiter le bis(hydroxy-4 phényl) alkylphosphonate de dialkyle correspondant par une solution alcoolique de soude à reflux pendant 10 à 24 heures; le chlorure de sodium précité est filtré, on évapore le solvant du filtrat jusqu'à siccité sous un vide de 0,5 à 2 mm de mercure.

Le brevet US 3 702 879 décrit la préparation des diesters bis(hydroxy-4 phényl)-1,1 éthylphosphoniques à partir d'un $\alpha$-cétophosphonate sur lequel on fait agir du phénol en présence d'un acide de Lewis.

De même les nouveaux diesters phosphoniques de bis (hydroxy-4 phényl) de propyl, butyle ou de pentyle peuvent être obtenus par action des $\beta$, $\gamma$ ou $\delta$ cétophosphonates avec du phénol en présence d'un acide de Lewis, de préférence le trifluorure de bore selon le processus réactionnel suivant

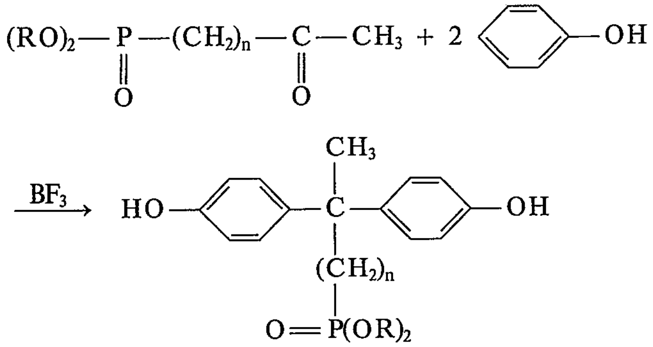


Comme diesters d'acides cétophosphoniques également appelés oxoalkyl phosphonate, on peut utiliser par exemple: l'oxo-2-propylphosphonate de diméthyle, l'oxo - 2 - propylphosphonate de diéthyle, l'oxo-3 - butyl phosphonate de diéthyle, l'oxo-4 pentylphosphonate de diéthyle, l'oxo-2 - propylphosphonate de dicyclohexyle.

Pour préparer les bis (hydroxy-4 phényl) alkylphosphonates de dialkyles selon l'invention, on mélange l'oxo alkylphosphonate avec le phénol et dans un rapport molaire phénol/oxoalkylphosphonate de 4 à 8 et on fait barbotter dans ce mélange le trifluorure de Bore jusqu'à saturation en maintenant la température entre 10 et 30°C de préférence entre 15 et 25°C, puis on élève la température aux environs de 40 à 50°C et la réaction de condensation s'effecture à pression ordinaire pendant 30 à 60 minutes.

Quant la réaction est terminée, on dilue le produit dans l'acide acétique on ajoute de l'eau qui précipite un produit huileux durcissant lentement. Le produit solidifié est lavé à l'eau, essoré, séché. La poudre obtenue est purifiée par recristallisation dans un solvant ou un mélange de solvants convenable. Pour obtenir les hémiesters alcalins correspondants on traite le bis(hydroxy-4 phényl)alkylphosphonate obtenu par une solution alcoolique de soude ou de potasse à reflux pendant 10 à 24 heures.

Ensuite, le milieu réactionnel est neutralisé avec HCl, jusqu'à pH = 7 et concentré sous pression réduite.

Le chlorure de sodium précipité est filtré et on termine l'évaporation du filtrat, sous un vide de 1 mm de Hg jusqu'à siccité.

Les produits sont identifiés par analyse élémentaire, spectre infrarouge et spectre R M N.

Les exemples suivants sont donnés à titre illustratifs et non limitatifs.

## Exemple 1

### Bis(hydroxy-4 phényl-1)-2,2 propylphosphonate de diméthyle

On sature 370 gr de phénol (3,97 moles) en $BF_3$ entre 20 et 25° C, puis on introduit goutte à goutte en 30 minutes 108 gr d'oxo-2 propylphosphonate de diméthyle (0,65 mole) tout en maintenant la température inférieure à 20° C. Puis on laisse la réaction s'effectuer à température ambiante. La température du milieu réactionnel monte jusqu'à 30 à 35° et se maintient dans cet intervalle de température pendant une heure sans qu'il soit nécessaire de chauffer. Au bout d'une heure on porte à 40° C le milieu réactionnel qui est maintenu à cette température pendant 30 minutes.

Puis on refroidit et on dilue avec 320 ml d'acide acétique et la solution acétique est versée dans 7 l d'eau. L'huile obtenue se solidifie en 20 heures environ. Le solide obtenu est lavé à l'eau, essoré, séché, et on obtient 184 gr d'un produit brut légèrement coloré qui est redissout dans le dioxane à reflux puis cristallisé par addition d'eau, essoré après refroidissement à l'aide de glace et séché. On obtient avec un rendement molaire de 75% une poudre blanche qui fond à 185° C.

Analyse élémentaire $C_{17}H_{21}PO_5$

| | | | |
|---|---|---|---|
| % calculé | C 60,71 | H 6,25 | P 9,22 |
| % trouvé | C 60,77 | H 6,21 | P 8,34 |

Spectre Infrarouge

| | |
|---|---|
| δ OH | = 3 300 $cm^{-1}$ |
| δ P=O | = 1 225 $cm^{-1}$ |
| δ P—O—C | = 1 050, 1 020 $cm^{-1}$ |

Spectre R M N du Proton (solvant D M S O deutéré)
DMSO = diméthylsulfoxyde

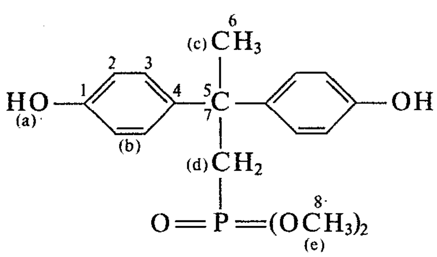

| | |
|---|---|
| δ = 9,16 ppm (s) | 2Ha |
| δ = 7,15—6,55 ppm (m) | 8Hb |
| δ = 3,28 ppm (d) | 6He, JP — He = 11 Hz |
| δ = 2,62 ppm (d) | 2Hd, JP — Hd = 20 Hz |
| δ = 1,76 ppm (s) | 3Hc |

Spectre R M N du 13c (solvant DMSO deutéré)

| | |
|---|---|
| δ = 156,6 ppm | $C_1$ |
| δ = 140,8—141,6 ppm | $C_4$ |
| δ = 129,3 ppm | $C_3$ |
| δ = 116,1 ppm | $C_2$ |
| δ = 52,9 ppm | $C_8$ |
| δ = 43,86 ppm | $C_5$ |
| δ = 34 ppm | $C_7$ |
| δ = 30 ppm | $C_6$ |

Exemple 2

Bis(hydroxy-4 phényl)-2,2 propylphosphonate de méthyle et de sodium

Dans un ballon muni d'un agitateur, d'un condensateur à reflux, d'un thermomètre et d'une introduction d'azote on dissout 33,6 g (0,1 mole) de bis(hydroxy-4 phényl)-2,2 propylphosphonate de diméthyle dans une solution alcoolique de soude préparée en dissolvant 0,3 mole de soude dans 27 ml d'eau et 100 ml de méthanol. Après avoir fait passer un courant d'azote dans le mélange, on porte au reflux pendant 24 heures, on refroidit à température ambiante, on neutralise avec HCl concentré jusqu'à pH 7 sous refroidissement. Ensuite on concentre sous pression réduite. Le résidu sec est dissout dans une faible quantité de méthanol et on filtre le chlorure de sodium précité; le filtrat est ensuite concentré sous pression réduite puis séché à 150—160° C sous vide de 1 mm de $H_g$.

On obtient 32,3 g (rendement 95%) d'une poudre blanche, hygroscopique qui se décompose vers 220—225° C.

L'analyse élémentaire donne les résultats suivants pour le sodium et phosphore.

| | % trouvé | % calculé |
|---|---|---|
| Na | 6,93 | 6,68 |
| P | 8,9 | 9,01 |

Dosage effectué par fluorescence X pour le phosphore.

Spectre RMN du proton dans $D_2O$ comme solvant

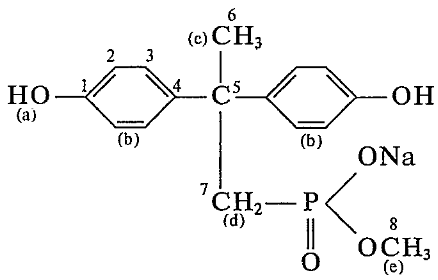

$\delta$ = 7,3 — 6,7 ppm (m) 8Hb
$\delta$ = 3,20 ppm (d) 3He; JP — He = 10,5 Hz
$\delta$ = 2,62 ppm (d) 2Hd; JP — Hd = 21,6 Hz
$\delta$ = 1,83 ppm (s) 3Hc

L'intégration confirme bien la présence d'un seul groupement méthoxy $OCH_3$.

RMN du proton dans DMSO deutéré

$\delta$ = 10 — 9 ppm protons Ha phénoliques
$\delta$ = 3,02 ppm (d) $H_e$

RMN du $^{13}C$ ($D_2O$)

| | |
|---|---|
| $\delta$ = 155,7 ppm | $C_1$ |
| $\delta$ = 144,5; 145,2 ppm | $C_4$ |
| $\delta$ = 130,9 ppm | $C_3$ |
| $\delta$ = 117,34 ppm | $C_2$ |
| $\delta$ = 53,7 ppm | $C_8$ |
| $\delta$ = 45,22 ppm | $C_5$ |
| $\delta$ = 36,4 ppm | $C_7$ |
| $\delta$ = 30,4 ppm | $C_6$ |

## Exemple 3

### Bis(hydroxy-4 phényl)-2,2 propylphosphonate de méthyle et de potassium

On dissout 8,4 g (0,025 mole) de bis(hydroxy-4 phényl)-2,2 propylphosphonate de diméthyle dans 118 ml d'une solution de potasse 2,6 N dans le méthanol.

On porte au reflux pendant 28 heures.

On procède ensuite, pour isoler le produit, comme dans l'exemple 2.

Le produit obtenu se décompose à 235° C.

Analyse élémentaire $C_{16}H_{18}PO_5K$

| | | |
|---|---|---|
| % calculé | P 8,61 | K 10,83 |
| % trouvé | P 8,10 | K 9,42 |

RMN du proton dans $D_2O$

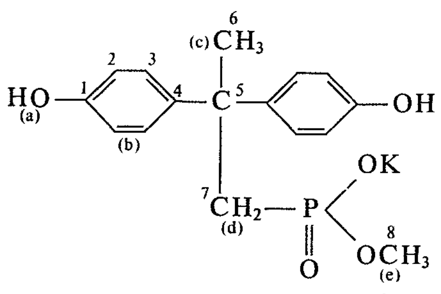

δ = 7,3—6,75 ppm (m) 8Hb
δ = 3,20 ppm (d) 3He    JP—He = 10,5 Hz
δ = 2,60 ppm (d) 2Hd    JP—Hd = 18 Hz
δ = 1,82 ppm (s) 3Hc

RMN du proton dans DMSO d6

Les protons phénoliques Ha sortent entre 10,5 et 9,5 ppm.

δ = 3,10 ppm (d) 3He    JP—He = 10,5 Hz

RMN du Carbone 13 dans $D_2O$

| | |
|---|---|
| δ = 155,7 ppm | $C_1$ |
| δ = 145,3—144,6 ppm | $C_4$ |
| δ = 130,9 ppm | $C_3$ |
| δ = 117,2 ppm | $C_2$ |
| δ = 53,73—53,34 ppm | $C_8$ |
| δ = 45,22 ppm | $C_5$ |
| δ = 36,38 ppm | $C_7$ |
| δ = 30,40 ppm | $C_6$ |

## Exemple 4

### Préparation du bis(hydroxy-4 phényl)-2,2 propylphosphonate de diéthyle

On mélange 97 g d'oxo - 2 propylphosphonate de diéthyle (0,5 mole) et 282 g de phénol (3 moles).

On amène la température par refroidissement aux environs de 10 à 15°C et on fait barbotter du trifluorure de bore jusqu'à saturation tout en maintenant la température du milieu inférieure à 25° C. Le milieu réactionnel qui a une teinte orangée est chauffé à 40° C pendant une heure, au cours de laquelle il devient de plus en plus visqueux et prend une teinte rouge violacée. On refroidit et on dissout la masse réactionnelle dans environ 250 ml d'acide acétique; puis on verse la solution acétique dans 6 litres d'eau. Une huile jaune se sépare et durcit très lentement en 48 heures.

Le produit solidifié est broyé, lavé plusieurs fois à l'eau sous agitation, essoré et séché. On obtient une poudre légèrement colorée qui est recristallisée dans un mélange d'acétate d'éthyle/cyclohexane dans la proportion 1 : 2. On obtient avec un rendement molaire de 69%, 126 gr. d'une poudre blanche qui fond à 152° C et dont les spectres IR et RMN ainsi que l'analyse élémentaire confirment la structure chimique suivante:

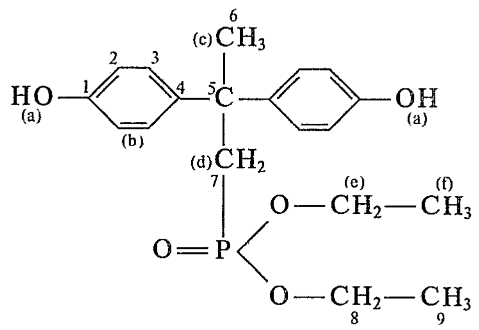

Analyse élémentaire $C_{19}H_{25}PO_5$

| | | | |
|---|---|---|---|
| % calculé | C 62,63 | H 6,86 | P 8,51 |
| % trouvé | C 62,61 | H 6,88 | P 8,49 |

Analyse infrarouge

| | |
|---|---|
| $\nu$ OH | = 3300 $cm^{-1}$ |
| $\nu$ CH aromatique | = 3100 $cm^{-1}$ |
| $\nu$ P=0 | = 1255 $cm^{-1}$ |
| $\nu$ P—O—C | = 1060 $cm^{-1}$ |
| | 1025 $cm^{-1}$ |
| | 960 $cm^{-1}$ |
| $\delta$ CH aromatique | 830 $cm^{-1}$ |

Spectre R M N $^1H$ (solvant D M S O deutéré)

| | |
|---|---|
| $\delta$=8,6 ppm (s) | 2 Ha |
| $\delta$=7,2 6,6 ppm (m) | 8 Hb |
| $\delta$=3,9 ppm (q) | 4 He |
| $\delta$=2,72 ppm (d) | 2 Hd, JP—Hd=19 Hz |
| $\delta$=1,9 ppm (s) | 3 Hc |
| $\delta$=1,15 ppm (t) | 6 Hf |

Spectre $^{13}C$ (DMSO deutéré)

| | |
|---|---|
| $\delta$=156,7 ppm | $C_1$ |
| $\delta$=141,6—140,8 ppm | $C_4$ |
| $\delta$=129,3 ppm | $C_3$ |
| $\delta$=115,9 ppm | $C_2$ |
| $\delta$= 61,9 ppm | $C_8$ |
| $\delta$= 43,9 ppm | $C_5$ |
| $\delta$= 30,2 ppm | $C_6$ |
| $\delta$= 34,7 ppm | $C_7$ |
| $\delta$= 17,86—17,41 ppm | $C_9$ |

## Exemple 5

### Bis(hydroxy-4 phényl)2,2 propylphosphonate d'éthyle et de sodium

On dissout 36,4 g (0,1 mole) de bis (hydroxy-4 phényl)-2,2 propylphosphonate de diéthyle dans une solution alcoolique de soude préparée comme dans l'exemple 2.

On porte au reflux pendant 24 heures, on refroidit à température ambiante on neutralise avec HCl

concentré jusqu'à pH 7 sous refroidissement; on observe à ce stade un insoluble qui a été identifié au bisphénolphosphate de diéthyle de départ. Afin d'éliminer totalement celui-ci, après hydrolyse alcaline on a traité le produit obtenu par un mélange acétate d'éthyle-cyclohexane chaud.

Le produit obtenu se présente sous la forme d'une poudre qui se décompose vers 220/225° C.

Analyse élémentaire $C_{17}H_{20}PO_5Na$

| | | |
|---|---|---|
| % calculé | P 8,65 | Na 6,42 |
| % trouvé | P 8,4 | Na 5,78 |

RMN du proton (solvant $D_2O$)

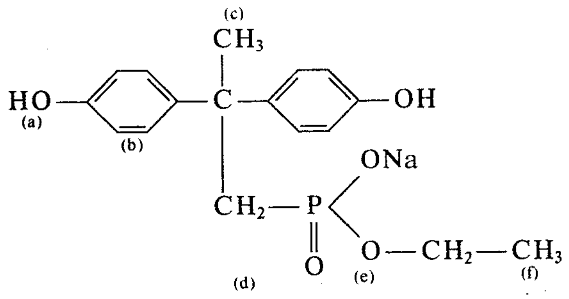

| | |
|---|---|
| $\delta = 7,18-6,6$ ppm (m) | 8 Hb |
| $\delta = 3,5$ ppm (q) | 2 He |
| $\delta = 2,57$ ppm (d) | 2 Hd; JP—Hd = 18 Hz |
| $\delta = 1,82$ ppm (s) | 3 Hc |
| $\delta = 1,05$ ppm (t) | 3 Hf |

## Exemple 6

### Bis(hydroxy-4 phényl)-2,2 propylphosphonate d'éthyle et de Potassium

On dissout 36,4 g (0,1 mole) de bis(hydroxy-4 phényl)-2,2 propylphosphonate de diéthyle dans une solution alcoolique de potasse préparée comme dans l'exemple 3.

On porte à reflux 24$^{H}$, puis on recroidit à température ambiante et on neutralise avec HCl concentré jusqu'à pH 7. On observe à ce stade un précipite collant que l'on élimine par filtration.

Le filtrat est concentré à sec, repris par une faible quantité de méthanol. On élimine le chlorure de sodium précipité par filtration, le filtrat méthanolique est ensuite concentré sous pression réduite puis séché sous vide de 2 mm de Hg.

Le produit obtenu a été traite à chaud par mélange acétate d'éthyl-cyclohexane, comme dans l'exemple 5.

Le produit se décompose à 225—230° C.

Analyse élémentaire $C_{17}H_{20}PO_5K$

| | | |
|---|---|---|
| % calculé | P 8,28 | K 10,42 |
| % trouvé | P 8 | K 9,71 |

## Exemple 7

### Préparation du bis(hydroxy-4 phényl)-3,3 butylphosphonate de diméthyle

On procède comme dans l'exemple 1. Le produit obtenu ($R^t = 86\%$) présente les caractéristiques suivantes:

Point de fusion 170° C.

Analyse élémentaire $C_{18}H_{23}PO_5$

| | | | |
|---|---|---|---|
| % calculé | C 61,71 | H 6,57 | P 8,85 |
| % trouvé | C 61,36 | H 6,50 | P 8,48 |

Spectre infrarouge

$\nu$ OH $= 3290\ cm^{-1}$
$\nu$ P=O $= 1225\ cm^{-1}$

Spectre RMN du Proton (solvant DMSO deutéré)

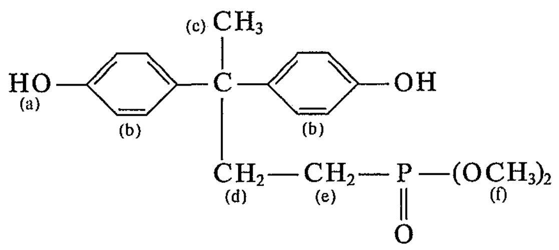

| | |
|---|---|
| $\delta = 9{,}33$ ppm (s) | 2 Ha |
| $\delta = 7{,}1\ 6{,}5$ ppm (m) | 8 Hb |
| $\delta = 3{,}58$ ppm (d) 6Hf, JP—Hf = | 10 Hz |
| $\delta = 2{,}3 - 1{,}6$ ppm (m) | 2 Hd + 2 He |
| $\delta = 1{,}5$ ppm (s) | 3 Hc |

Exemple 8

Bis (hydroxy-4 phényl) - 3,3 butyl phosphonate de méthyle et de sodium

On dissout 30 g de NaI dans 300 ml d'acétone puis on introduit 35 g (0,1 mole) de bis(hydroxy-4 phényl)-2,2 butyl phosphonate de diméthyle puis on porte la solution obtenue au reflux pendant 32 heures temps au bout duquel s'est formé un précipité important.

On filtre à chaud, lavè plusieurs fois à l'acétone chaud puis on séche le produit à 100° C à l'étuve.

On obtient 21 g (rendement 58%) d'une poudre blanche hygroscopique qui se décompose à 240° C.

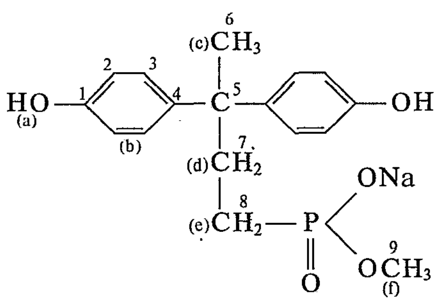

RMN $^1H$ ($D_2O$)

| | |
|---|---|
| $\delta = 7{,}17 - 6{,}67$ ppm (multiplet) | 8 Hb |
| $\delta = 3{,}41$ ppm (doublet) 3 Hf, JP—Hf = | 10 Hz |
| $\delta = 2{,}36 - 2{,}02$ ppm (multiplet) | He |
| $\delta = 1{,}51$ ppm (singulet) | 3 Hc |

Les protons Hd sortent entre 1,5 et 1,07 (multiplet) et sont partiellement cachés par les protons Hc

RMN$^{13}C$ ($D_2O$)

| | |
|---|---|
| $\delta = 155{,}80$ ppm | $C_1$ |
| $\delta = 143{,}91$ ppm | $C_4$ |
| $\delta = 131{,}11$ ppm | $C_3$ |
| $\delta = 117{,}47$ ppm | $C_2$ |
| $\delta = 53{,}92 - 53{,}60$ ppm | $C_9$ |

$\delta =$ 47,75—46,5 ppm $C_5$
$\delta =$ 37,35 ppm $C_7$
$\delta =$ 29,04 ppm $C_6$
$\delta =$ 23,42 ppm (doublet) $C_8$ JP—$C_8$ = 133,8 Hz

Exemple 9

Préparation du bis(hydroxy-4 phényl)-1,1 éthyl phosphonate de méthyle et de sodium par hydrolyse alcaline du bis(hydroxy-4 phényl)-1,1 éthyl phosphonate de diméthyle

On dissout 32,2 g (0,1 mole) de bis(hydroxy-4 phényl)-1,1 éthyl phosphonate de diméthyle qui a été obtenu selon un procédé décrit dans le brevet US 3 702 879 dans une solution hydroalcoolique de soude préparée selon les conditions données dans l'exemple 2.

On porte à reflux pendant 24 heures puis, on procéde pour isoler le produit comme dans l'exemple 2.

On obtient une poudre blanche qui se décompose à 260° C.

Analyse élémentaire $C_{15}H_{16}PO_5Na$

| | | |
|---|---|---|
| % calculé | P 9,39 | Na 6,96 |
| % trouvé | P 8,5 | Na 7,17 |

RMN du proton (solvant $D_2O$)

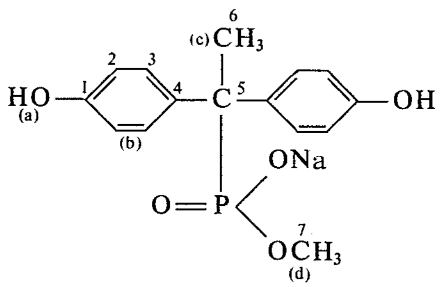

| | |
|---|---|
| $\delta$ = 7,4—6,7 ppm (m) | 8 Hb |
| $\delta$ = 3,32 ppm (d) | 3 Hd; JP—Hd = 9,75 Hz |
| $\delta$ = 1,80 ppm (d) | 3 Hc; JP—Hc = 15,27 Hz |

RMN du $^{13}C$ dans $D_2O$

| | |
|---|---|
| $\delta$ = 156,19 ppm | $C_1$ |
| $\delta$ = 140,53—140,27 ppm | $C_4$ |
| $\delta$ = 133,12—133,67 ppm | $C_3$ |
| $\delta$ = 117,27 ppm | $C_2$ |
| $\delta$ = 58,02 ppm | $C_7$ |
| $\delta$ = 51 ppm (doublet) | $C_5$ JP—$C_5$ = 121 Hz |
| $\delta$ = 28,39—28,19 ppm | $C_6$ |

Exemple 10

Préparation du bis(hydroxy-4 phényl)-1,1 éthyl phosphonate de méthyle et de sodium par action de l'iodure de sodium sur le bis phénol phosphonate de diméthyle

On disosut 24,5 g de NaI (0,163 mole) dans 250 ml d'acétone puis on introduit 26 g de bis(hydroxy-4 phényl)-1,1 éthyl phosphonate de diméthyle (0,0807 mole).

On porte la solution obtenue au reflux pendant 24 heures temps au bout duquel un précipité important s'est formé.

On filtre à chaud, lave plusieurs fois à l'acétone chaud puis on séche le produit à 100° C en étuve.

On obtient 21 g d'une poudre blanche (rendement 78,8%) qui se décompose à 225° C environ

RMN du proton dans $D_2O$

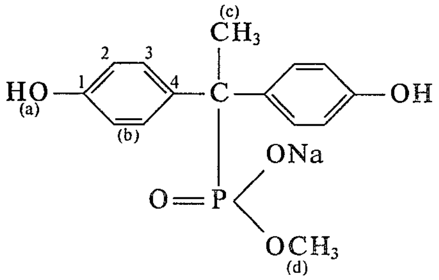

| | |
|---|---|
| $\delta$=7,4—6,7 ppm (m) | 8 Hb |
| $\delta$=3,30 ppm (d) | 3 Hd, JP—Hd=10,5 Hz |
| $\delta$=1,79 ppm (d) | 3 Hc, JP—Hc=15,0 Hz |

RMN du proton dans DMSO d6

Les protons phénoliques Ha sortent à 9,6 ppm.

RMN du $^{13}C$ dans DMSO deutéré

| | |
|---|---|
| $\delta$=156,38 ppm | $C_1$ |
| $\delta$=139,3—139,04 ppm | $C_4$ |
| $\delta$=131,5—131,1 ppm | $C_3$ |
| $\delta$=115,45 ppm | $C_2$ |

## Exemple 11

### Bis (hydroxy-4 phényl)-1,1 éthyl phosphonate de méthyle et de potassium

On dissout 32,2 g (0,1 mole de bis(hydroxy-4 phényl)-1,1 éthyl phosphonate de diméthyle dans 118 ml de solution de potasse 2,6 N dans le méthanol.

Après avoir fait passer un courant d'azote dans le mélange on porte au reflux pendant 24 heures.

On procède ensuite comme dans l'exemple 2.

Le produit obtenu est une poudre hygroscopique qui se décompose à 220/225° C.

Analyse élémentaire $C_{15}H_{16}PO_5K$

| | | |
|---|---|---|
| % calculé | P 8,95 | K 11,27 |
| % trouvé | P 8,44 | K 10,70 |

RMN du Proton ($D_2O$)

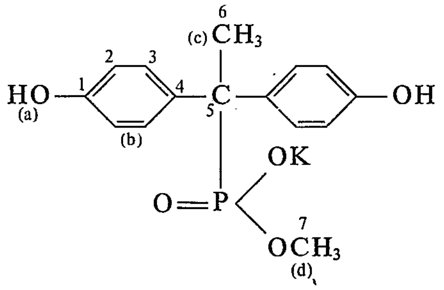

| | |
|---|---|
| $\delta$=7,5—6,75 ppm (m) | 8 Hb |
| $\delta$=3,47 ppm (d) | 3 Hd; JP—Hd=10 Hz |
| $\delta$=1,95 ppm (d) | 3 Hc; JP—Hc=15 Hz |

RMN du proton dans DMSO deutéré

Les protons phénoliques sortent vers 9,85 ppm.

| | |
|---|---|
| $\delta = 7{,}4-6{,}4$ ppm (m) | 8 Hb |
| $\delta = 3{,}04$ ppm (d) | 8 Hd; JP—Hd = 9,75 Hz |
| $\delta = 1{,}72$ ppm (d) | 3 Hc; JP—Hc = 13,5 Hz |

RMN du $^{13}C$ dans $D_2O$

| | |
|---|---|
| $\delta = 156{,}06$ ppm | $C_1$ |
| $\delta = 140{,}3-140$ ppm | $C_4$ |
| $\delta = 132{,}99-132{,}60$ ppm | $C_3$ |
| $\delta = 117{,}21$ ppm | $C_2$ |
| $\delta = 55{,}94-55{,}22$ ppm | $C_7$ |
| $\delta = 51{,}36$ ppm | $C_5$; $JP-C_5 = 133{,}8$ Hz |
| $\delta = 28{,}45-28{,}20$ ppm | $C_6$ |

**Revendications**

1. Hémiesters alcalins d'acides bis(hydroxy-4 phényl) alkylphosphoniques de formule générale

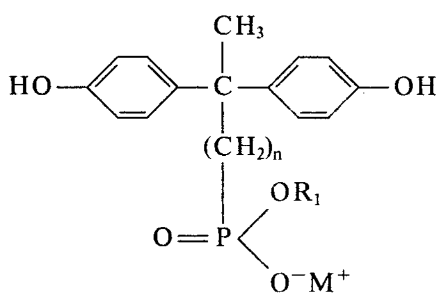

dans laquelle:

n est égal à 0, 1, 2 ou 3
M représente un métal alcalin choisi parmi le lithium, le sodium ou le potassium, et
$R_1$ désigne un radical cyclohexyle ou un radical alkyle ayant de 1 à 6 carbones.

2. Un hémiester selon la revendication 1, ledit composé étant le bis(hydroxy-4 phényl)-2,2 propylphosphonate de méthyle et de sodium.

3. Un hémiester selon la revendication 1, ledit composé étant le bis(hydroxy-4 phényl)-2,2 propylphosphonate de méthyle et de potassium.

4. Un hémiester selon la revendication 1, ledit composé étant le bis(hydroxy-4 phényl)-2,2 propylphosphonate d'éthyle et de sodium.

5. Un hémiester selon la revendication 1, ledit composé étant le bis(hydroxy-4 phényl)-2,2 propylphosphonate d'éthyle et de potassium.

6. Un hémiester selon la revendication 1, ledit composé étant le bis(hydroxy-4 phényl)-3,3 butylphosphonate de méthyle et de sodium.

7. Un hémiester selon la revendication 1, ledit composé étant le bis(hydroxy-4 phényl)-1,1 éthylphosphonate de méthyle et de sodium.

8. Un hémiester selon la revendication 1, ledit composé étant le bis(hydroxy-4 phényl)-1,1 éthylphosphonate de méthyle et de potassium.

**Patentansprüche**

1. Alkalische Hemiester von Bis-(4-hydroxyphenyl)-alkylphosphonsäure der allgemeinen Formel

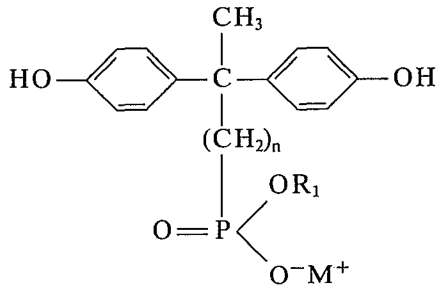

worin

n = 0, 1, 2 oder 3
M = Lithium, Natrium oder Kalium
R = Cyclohexyl oder ein Alkylrest mit 1 bis 6 Kohlenstoffatomen

2. Hemiester nach Anspruch 1, dadurch gekennzeichnet, daß er ein Methyl- und Natrium Bis-(4-hydroxyphenyl)-2,2propylphosphonat darstellt.
3. Hemiester nach Anspruch 1, dadurch gekennzeichnet, daß er ein Methyl- und Kalium Bis-(4-hydroxyphenyl)-2,2 propylphosphonat darstellt.
4. Hemiester nach Anspruch 1, dadurch gekennzeichnet, daß er ein Äthyl- und Natrium Bis-(4-hydroxyphenyl)-2,2 propylphosphonat darstellt.
5. Hemiester nach Anspruch 1, dadurch gekennzeichnet, daß er ein Äthyl- und Kalium Bis-(4-hydroxyphenyl)-2,2 propylphosphonat darstellt.
6. Hemiester nach Anspruch 1, dadurch gekennzeichnet, daß er ein. Methyl- und Natrium Bis-(4-hydroxyphenyl)-3,3 butylphosphonat darstellt.
7. Hemiester nach Anspruch 1, dadurch gekennzeichnet, daß er ein Methyl- und Natrium Bis-(4-hydroxyphenyl)-1,1 äthylphosphonat darstellt.
8. Hemiester nach Anspruch 1, dadurch gekennzeichnet, daß er ein Methyl- und Kalium Bis-(4-hydroxyphenyl)-1,1 äthylphosphonat darstellt.

**Claims**

1. Alkaline hemiesters of bis-(4-hydroxyphenyl)-alkyl-phosphonic acids of the general formula

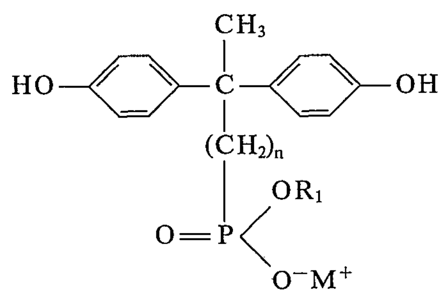

in which:

n is equal to 0, 1, 2, or 3,
M is an alkali metal selcted from lithium, sodium or potassium, and
$R_1$ is cyclohexyl radical or a $C_1$ to $C_6$ alkyl radical.

2. A hemiester according to claim 1, consisting of methyl and sodium bis-(4-hydroxyphenyl)-2,2-propylphosphonate.
3. A hemiester according to claim 1, consisting of methyl and potassium bis-(4-hydroxyphenyl)-2,2-propylphosphonate.

4. A hemiester according to claim 1, consisting of ethyl and sodium bis-(4-hydroxyphenyl)-2,2-propylphosphonate.

5. A hemiester according to claim 1, consisting of ethyl and potassium bis-(4-hydroxyphenyl)-2,2-propylphosphonate.

6. A hemiester according to claim 1, consisting of methyl and sodium bis-(4-hydroxyphenyl)-3,3-butylphosphonate.

7. A hemiester according to claim 1, consisting of methyl and sodium bis-(4-hydroxyphenyl)-1,1-ethylphosphonate.

8. A hemiester according to claim 1, consisting of methyl and potassium bis-(4-hydroxyphenyl)-1,1-ethylphosphonate.